(19) Europäisches Patentamt
European Patent Office
Office européen des brevets

(11) Veröffentlichungsnummer: **0 036 582**
**B1**

(12) # EUROPÄISCHE PATENTSCHRIFT

(45) Veröffentlichungstag der Patentschrift: **30.05.84**

(21) Anmeldenummer: **81101862.1**

(22) Anmeldetag: **13.03.81**

(51) Int. Cl.³: **C 09 B 62/085,** C 09 B 62/51, C 09 B 62/473, D 06 P 3/10, D 06 P 3/66

(54) **Wasserlösliche Azoverbindungen, Verfahren zu ihrer Herstellung und ihre Verwendung als Farbstoffe.**

(30) Priorität: **25.03.80 DE 3011447**

(43) Veröffentlichungstag der Anmeldung: **30.09.81 Patentblatt 81/39**

(45) Bekanntmachung des Hinweises auf die Patenterteilung: **30.05.84 Patentblatt 84/22**

(84) Benannte Vertragsstaaten: **CH DE FR GB IT LI**

(56) Entgegenhaltungen:
**DE - A - 2 927 102**
**DE - B - 1 265 698**

(73) Patentinhaber: **HOECHST AKTIENGESELLSCHAFT, Postfach 80 03 20, D-6230 Frankfurt am Main 80 (DE)**

(72) Erfinder: **Otten, Joachim, Dr., verstorben (DE)**
Erfinder: **Hähnke, Manfred, Dr., Behringstrasse 13, D-6233 Kelkheim (Taunus) (DE)**

**EP 0 036 582 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung liegt auf dem technischen Gebiet der faserreaktiven Farbstoffe.

Aus der deutschen Patentschrift 1 265 698 und der deutschen Offelegungsschrift 2 927 102 sind Azofarbstoffe bekannt, die einen faserreaktiven Rest aus der Vinylsulfonreihe und als einen weiteren faserreaktiven Rest einen Monohalogentriazinylrest enthalten. Die beschriebenen Farbstoffe besitzen jedoch gewisse anwendungstechnische Mängel, so dass sie verschiedenen Anforderungen nicht vollauf genügen.

Mit der vorliegenden Erfindung wurden nunmehr neue Azoverbindungen gefunden, die, in Form der freien Säure geschrieben, der allgemeinen Formel (1)

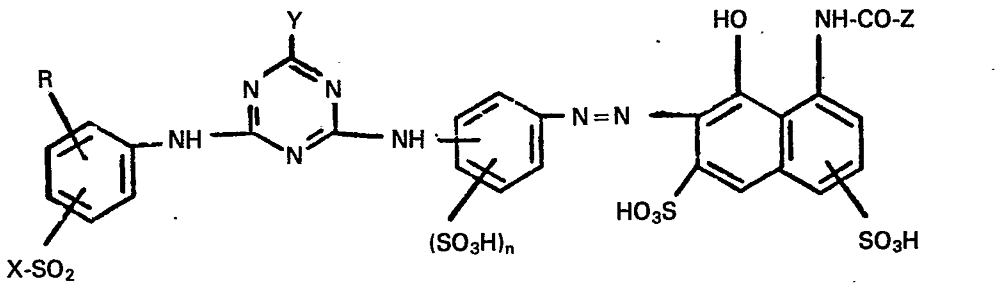

(1)

entsprechen. In dieser Formel (1) bedeuten:

R ist ein Wasserstoffatom, ein Chloratom, eine Alkylgruppe von 1 bis 4 C-Atomen, insbesondere die Methylgruppe, eine Alkoxygruppe von 1 bis 4 C-Atomen, insbesondere die Methoxygruppe, oder die Carboxygruppe;

X ist die Vinylgruppe, die $\beta$-Chloräthyl-, $\beta$-Thiosulfatoäthyl oder bevorzugt die $\beta$-Sulfatoäthylgruppe, wobei die Gruppe der Formel $-SO_2-X$ in 3- oder 4-Stellung zur Aminogruppe steht;

Y ist ein Chlor- oder Fluoratom;

Z ist eine Alkylgruppe von 1 bis 4 C-Atomen, vorzugsweise die Methyl- oder Äthylgruppe, die durch ein Chlor- oder ein Bromatom oder an zwei verschiedenen C-Atomen durch jeweils ein Chlor- oder Bromatom substituiert ist, oder ist eine Alkenylgruppe von 2 bis 4 C-Atomen, vorzugsweise die Vinylgruppe, die durch ein Chlor- oder Bromatom substituiert sein kann;

n ist die Zahl 1 oder 2, vorzugsweise 1, wobei eine Sulfogruppe bevorzugt in ortho-Stellung zur Azogruppe im Benzolkern gebunden ist;

die zweite Sulfogruppe im Naphthalinrest steht in m- oder p-Stellung zur acylierten Aminogruppe.

Die neuen Azoverbindungen können sowohl in Form der freien Säure als auch in Form ihrer Salze vorliegen. Bevorzugt sind sie in Form der Salze, insbesondere der Alkalimetallsalze, wie Natrium- und Kaliumsalze. Sie finden bevorzugt in Form der Salze, insbesondere in Form der Alkalimetallsalze, Verwendung zum Färben (hier und im nachfolgenden im allgemeinen Sinne und einschliesslich des Bedruckens verstanden) von hydroxy- und carbonamidgruppenhaltigem Material, insbesondere Fasermaterial.

In den obengenannten Verbindungen der allgemeinen Formel (1) ist der Formelrest Z insbesondere der Chlormethyl-, $\beta$-Chloräthyl-, $\beta$-Bromäthyl-, $\alpha,\beta$-Dichloräthyl-, $\alpha,\beta$-Dibromäthyl-, $\alpha$-Chlorvinyl- oder $\alpha$-Bromvinylrest, hiervon bevorzugt der $\beta$-Chloräthyl- und der $\alpha$-Bromvinylrest.

Die vorliegende Erfindung betrifft weiterhin ein Verfahren zur Herstellung dieser neuen Verbindungen entsprechend der allgemeinen Formel (1) und ihrer Salze.

Sie lassen sich erfindungsgemäss herstellen, indem man eine Diazoniumverbindung eines Amins entsprechend der allgemeinen Formel (2)

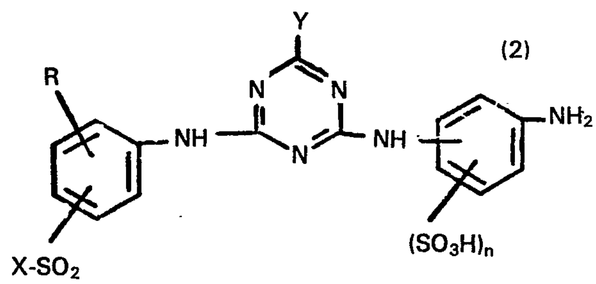

(2)

in welcher R, X, Y und n die obengenannten Bedeutungen haben, wobei die Gruppe der Formel $-SO_2X$ in 3- oder 4-Stellung zur Aminogruppe und eine Sulfonsäuregruppe bevorzugt in ortho-Stellung zur primären Aminogruppe im Benzolkern gebunden ist, mit einer Verbindung entsprechend der allgemeinen Formel (3), beispielsweise in Form des Alkalimetallsalzes,

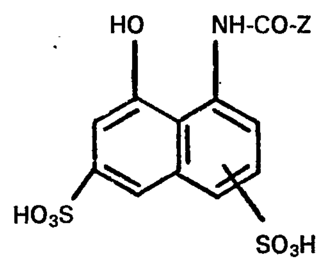

(3)

in welcher Z die obengenannte Bedeutung hat und die zweite Sulfogruppe im Naphthalinrest in m- oder p-Stellung zur acylierten Aminogruppe steht, kuppelt.

Die Verbindungen der allgemeinen Formel (2) und der allgemeinen Formel (3) sind an und für sich bekannt. Die Verbindungen der allgemeinen Formel (2) lassen sich beispielsweise herstellen, indem man ein Diamin der allgemeinen Formel (4)

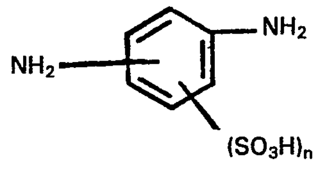

(4)

in welcher n die obengenannte Bedeutung hat und eine Sulfogruppe bevorzugt in ortho-Stellung zu einer der Aminogruppen steht, zunächst mit Cyanurchlorid oder Cyanurfluorid umsetzt und sodann dieses Kondensationsprodukt in einem zweiten Reaktionsschritt mit einem Amin der allgemeinen Formel (5)

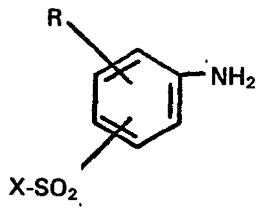

(5)

in welcher R und X die obengenannten Bedeutungen haben und die Gruppe der Formel $-SO_2-X$ in 3- oder 4-Stellung zur Aminogruppe steht, zur Verbindung der allgemeinen Formel (2) umsetzt. Das Amin der allgemeinen Formel (2) kann auch in der Weise hergestellt werden, dass man Cyanurchlorid oder Cyanurfluorid zunächst mit einem Amin der allgemeinen Formel (5) umsetzt und das so hergestellte primäre Kondensationsprodukt anschliessend mit einem Diamin der allgemeinen Formel (4) umsetzt. Diese oben beschriebenen Umsetzungen können in an und für sich üblicher Weise analog den bekannten Umsetzungsmethoden von aromatischen Aminen mit Cyanurhalogeniden durchgeführt werden.

Die Verbindungen der allgemeinen Formel (3) können ebenso nach üblichen und bekannten Verfahrensweisen hergestellt werden, indem man eine entsprechende Aminonaphtholdisulfonsäure in schwach saurem bis alkalischem Bereich, bevorzugt bei einem pH-Wert von 7 bis 8, und bei niedrigen Temperaturen, wie beispielsweise bei einer Temperatur zwischen —°C und +5°C, mit einem Säurehalogenid der allgemeinen Formel (6)

$$\text{Hal - CO - Z} \qquad (6)$$

in welcher Z die obengenannte Bedeutung hat und Hal für ein Chlor- oder Bromatom steht, in wässrigem Medium umsetzt.

Die Diazotierung des Amins der allgemeinen Formel (2) wie auch die erfindungsgemässe Umsetzung dieses diazotierten Amins mit einer Verbindung der allgemeinen Formel (3) als Kupplungsreaktion kann ebenfalls nach den üblichen und altbekannten Methoden der Diazotierung und Kupplung mit Acylamino-naphtholdisulfonsäuren erfolgen, wobei auch hier, wie bei der Herstellung und Weiterverarbeitung des Amins der Formel (2), das Arbeiten bei stärker alkalischen Bedingungen vermieden werden muss, um eine Schädigung der faserreaktiven Gruppen zu vermeiden; vorteilhaft hält man den pH-Wert des entsprechenden Reaktionsmediums unterhalb von 7,5. Bevorzugt erfolgt deshalb die Kupplungsreaktion in einem pH-Bereich zwischen 4 und 7,5; als Reaktionstemperatur kann eine Temperatur zwischen 0°C und +30°C gewählt werden.

Die Abscheidung der erfindungsgemäss hergestellten Verbindungen der allgemeinen Formel (1) aus der Syntheselösung kann man allgemein bekannten Methoden erfolgen, so beispielsweise entweder durch Ausfällen aus dem Reaktionsmedium mittels Elektrolyten, wie beispielsweise Natriumchlorid oder Kaliumchlorid, oder durch Eindampfen der Reaktionslösung, beispielsweise durch Sprühtrocknung, wobei dieser Reaktionslösung eine Puffersubstanz zugefügt werden kann.

Die neuen erfindungsgemässen Verbindungen der allgemeinen Formel (1) haben faserreaktive Eigenschaften und besitzen sehr gute Farbstoffeigenschaften. Sie können deshalb zum Färben der anfangs genannten Materialien verwendet werden. Auch können die bei der Synthese der erfindungsgemässen Verbindungen anfallenden Lösungen, gegebenenfalls nach Zusatz einer Puffersubstanz, gegebenenfalls auch nach Konzentrierung, direkt als Flüssigpräparation der färberischen Verwendung zugeführt werden.

Gegenstand der vorliegenden Erfindung ist deshalb auch die Verwendung der erfindungsgemässen Azoverbindungen entsprechend der allgemeinen Formel (1) zum Färben von hydroxy- und carbonamidgruppenhaltigen Materialien bzw. Verfahren zu deren Anwendung auf diesen Substraten. Bevorzugt kommen die Materialien in Form von Fasermaterialien zur Anwendung, insbesondere in Form von Textilfasern, wie Garnen, Wickelkörpern und Geweben.

Hydroxygruppenhaltige Materialien sind solche natürlichen oder synthetischen Ursprungs, wie beispielsweise Cellulosefasermaterialien oder deren Regeneratprodukte und Polyvinylalkohole. Cellulosefasermaterialien sind vorzugsweise Baumwolle, aber auch andere Pflanzenfasern, wie Leinen, Hanf, Jute und Ramiefasern; regenerierte Cellulosefasern sind beispielsweise Zellwolle und Viskosekunstseide.

Carbonamidgruppenhaltige Materialien sind beispielsweise synthetische und natürliche Polyamide und Polyurethane, insbesondere in Form der Fasern, beispielsweise Wolle und andere Tierhaare, Seide, Leder, Polyamid-6,6, Polyamid-6, Polyamid-11 und Polyamid-4.

Die erfindungsgemässen Verbindungen der allgemeinen Formel (1) lassen sich auf den genannten Substraten, insbesondere auf den genannten Fasermaterialien, nach den für wasserlösliche Farbstoffe, insbesondere nach den für wasserlösliche faserreaktive Farbstoffe, bekannten Anwendungstechniken applizieren und fixieren.

So erhält man mit ihnen auf Cellulosefasern nach den Ausziehverfahren aus langer Flotte unter Verwendung von säurebindenden Mitteln und gegebenenfalls neutralen Salzen, wie Natriumchlorid oder Natriumsulfat, sehr gute Farbausbeuten. Ebenso werden nach dem Klotzverfahren und nach den üblichen Druckverfahren auf Cellulosefasermaterialien farbstarke Färbungen und Drucke erhalten. Die Färbungen und Drucke zeichnen sich durch gute Echtheitseigenschaften aus, so beispielsweise durch eine gute Reibechtheit, durch gute Lichtechtheiten und gute Nassechtheiten, wie beispielsweise Waschechtheiten, Wasserechtheit, Säure- und Alkaliechtheit, Beständigkeit gegen die Behandlung mit Chlor oder Peroxide enthaltenden Mitteln, Schweissechtheiten sowie Lichtechtheit in trockenem und in feuchtem Zustand.

Von besonderer Bedeutung ist die erfindungsgemässe Verwendung der Verbindungen der allgemeinen Formel (1) für das faserreaktive Färben von Wolle. Insbesondere lässt sich auch filzfrei oder filzarm ausgerüstete Wolle [vgl. beispielsweise H. Rath, Lehrbuch der Textilchemie, Springer-Verlag, 3. Auflage (1972), S. 295-299, insbesondere die Ausrüstung nach dem sog. Hercosett-Verfahren (s. 298); J. Soc. Dyers and Colourists, *1972*, 93-99, und *1975*, 33-44] mit sehr guten Echtheitseigenschaften färben.

Die Durchführung der Färbung auf Wolle erfolgt hierbei in üblicher und bekannter Färbeweise, beispielsweise nach dem Ausziehverfahren, indem man die Färbung bevorzugt zunächst aus saurem, wässrigem Färbebad bei einem pH von 3,5 bis 5,5 unter Kontrolle des pH-Wertes vornimmt und schliesslich gegen Ende der Färbezeit den pH-Wert des Färbebades in den neutralen und gegebenenfalls schwach alkalischen Bereich bis zu einem pH von 8,5 verschiebt, um eine möglichst vollständige chemische Bindung zwischen dem Farbstoff der Formel (1) und der Faser herbeizuführen, was besonders zur Erzielung von hohen Farbtiefen auf der Faser erforderlich ist. Der hierbei nicht reaktiv an die Faser gebundene Farbstoffanteil wird gleichzeitig von der Faser abgetrennt.

Die hier beschriebene Verfahrensweise gilt auch zur Herstellung von Färbungen auf Fasermaterialien aus anderen natürlichen Polyamiden oder aus synthetischen Polyamiden und Polyurethanen. Die Färbungen werden bei Temperaturen von 60 bis 100°C durchgeführt, jedoch können sie auch in geschlossenen Färbeapparaturen bei Temperaturen bis zu 106°C erfolgen. Da die Wasserlöslichkeit der Verbindungen der allgemeinen Formel (1) sehr gut ist, lassen sie sich auch mit Vorteil bei üblichen kontinuierlichen Färbeverfahren einsetzen. Die Farbstärke der erfindungsgemässen Verbindungen der allgemeinen Formel (1) ist sehr hoch. Sie liefern auf den Fasermaterialien, insbesondere beim reaktiven Färben von Wolle, sehr klare, gelbstichig bis blaustichig rote Färbungen. Bei Anwendungen von Färbetemperaturen von 100 bis 106°C ist eine hohe Baderschöpfung festzustellen.

Bei den mit den erfindungsgemässen Verbindungen der allgemeinen Formel (1) erhältlichen Färbungen kann auf eine ansonsten übliche ammoniakalische Nachbehandlung der gefärbten Ware verzichtet werden. Im Vergleich zu konstitutionell ähnlichen, bekannten Farbstoffen zeigen sie in überraschender Weise einen sehr guten Farbaufbau, wobei die brillante Nuance auch in tiefen Tönen erhalten bleibt. Darüber hinaus zeigen sie eine sehr gute Kombinierbarkeit mit anderen faserreaktiven Wollfarbstoffen, die ein überraschend egales Färben der Faser ermöglichen. Ebenso lässt sich Material aus Wollfasern unterschiedlicher Provenienz mit den erfindungsgemässen Verbindungen egal färben. Zur Verbesserung des Egalisierverhaltens kann gegebenenfalls ein übliches Egalisierhilfsmittel, wie beispielsweise N-Methyltaurin, zugesetzt werden.

Unter Verwendung der üblichen faseraffinen Färbehilfsmittel ergeben die erfindungsgemässen Verbindungen auch auf filzfrei oder filzarm ausgerüsteter Wolle egale Färbungen. Bei hellen bis mittleren Farbtiefen ist auch ohne ammoniakalische Nachbehandlung ein sehr gutes Nassechtheitsniveau zu erzielen, wobei jedoch gegebenenfalls eine ammoniakalische Nachbehandlung bevorzugt werden kann. Neben der hohen Lichtechtheit dieser Wollfärbungen sind als sehr gute Nassechtheitseigenschaften insbesondere die ausgezeichnete alkalische Schweissechtheit und sehr gute Waschechtheit bei 60°C, auch von Färbungen in hohen Farbtiefen, zu nennen. Daneben weisen die Färbungen eine ausgezeichnete Wasserechtheit, Pottingechtheit, Überfärbe-, Reib-, Meerwasser-, Säure-, Alkali-, Carbonisier-, Bügel-, Plissier- und Dekatierechtheit auf.

Von den erfindungsgemässen Verbindungen können insbesondere diejenigen hervorgehoben werden, die, in Form der freien Säure geschrieben, der allgemeinen Formel (1a)

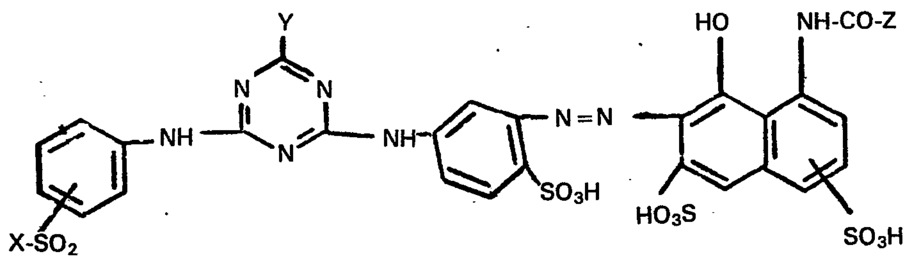

(1a)

entsprechen, in welcher X, Y und Z die obengenannten Bedeutungen haben, X jedoch bevorzugt die β-Sulfatoäthylgruppe ist und die Gruppe der Formel $X\text{-}SO_2$- im Benzolkern in 3- oder 4-Stellung zur Aminogruppe sowie die zweite Sulfogruppe im Naphthalinkern in m- oder p-Stellung zur acylierten Aminogruppe gebunden ist. Als bevorzugte Einzelverbindungen können die erfindungsgemässen Azoverbindungen der Beispiele 1 und 2 erwähnt werden.

Die nachstehenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter.

*Beispiel 1*

Eine Lösung aus 184 Teilen Cyanurchlorid in 1000 Teilen Aceton wird unter Rühren auf 3000 Teile zerstossenes Eis gegossen. Bei einer Temperatur von 10 bis 15°C lässt man unter Rühren eine neutrale Lösung von 281 Teilen Anilin-4-β-sulfatoäthylsulfon und 110 Teilen Natriumbicarbonat in 2000 Teilen Wasser zulaufen. Der pH wird unter Eintragen von Natriumbicarbonat auf einen Wert von 4,5 bis 5,5 gehalten. Es wird noch 1 bis 2 Stunden nachgerührt, bis bei einer entnommenen Probe keine diazotierbaren Anteile mehr nachweisbar sind.

Die so erhaltene Suspension lässt man innerhalb einer Stunde zu einer Lösung von 188 Teilen

1,3-Diaminobenzol-4-sulfonsäure und 75 Teile Natriumcarbonat in 2000 Teilen Wasser unter Rühren einlaufen, wobei die Temperatur auf 30 bis 35°C gehalten wird. Man rührt 2 Stunden unter Einhaltung eines pH-Wertes von 5 bis 6 durch portionsweises Eintragen von etwa 100 Teilen Natriumbicarbonat nach. Im Reaktionsgemisch ist sodann dünnschichtchromatographisch keine 1,3-Diaminobenzol-4-sulfonsäure mehr nachweisbar. Man kühlt sodann auf 0 bis 3°C ab, stellt mit etwa 20 Teilen Natriumcarbonat einen pH-Wert von 7 bis 7,5 ein und gibt sodann 200 Volumenteile einer wässrigen 5n-Natriumnitritlösung hinzu. Diese Mischung lässt man unter Rühren innerhalb einer Stunde bei 0 bis 3°C in ein Gemisch aus 300 Teilen wässriger konzentrierter Salzsäure und 1000 Teilen Eiswasser einlaufen. Es wird noch 30 Minuten lang nachgerührt und überschüssige salpetrige Säure durch etwas Amidosulfonsäure zerstört.

Zu dieser Diazoniumsalzlösung wird eine Lösung bzw. Suspension von 1-(β-Chlorpropionylamino)-naphthol(8)-3,6-disulfonsäure als Kupplungskomponente hinzugefügt, die wie folgt hergestellt werden kann: Zu einer 0°C bis 5°C kalten Lösung von 319 Teilen 1-Amino-8-naphthol-3,6-disulfonsäure in 800 Teilen Wasser und etwa 90 Teilen Natriumcarbonat mit einem pH-Wert von 6,5 bis 7,0 werden 150 Teile β-Chlorpropionsäurechlorid unter Rühren zugetropft, wobei der pH des Reaktionsgemisches durch portionsweises Eintragen von etwa 90 Teilen Natriumbicarbonat auf einem Wert von 6,8 bis 7,5 gehalten wird. Es wird noch etwa 30 Minuten lang bei diesem pH und bei einer Temperatur von 0 bis 3°C nachgerührt, bis eine entnommene Probe keine diazotierbaren Anteile mehr enthält.

Nachdem diese Lösung bzw. Suspension der Kupplungskomponente mit der Diazoniumsalzlösung vereinigt ist, wird das Kupplungsgemisch bei Raumtemperatur unter Einhaltung eines pH-Wertes von 6,5 mittels Natriumbicarbonat noch 2 Stunden lang nachgerührt. Nach beendeter Kupplung wird die hergestellte erfindungsgemässe Verbindung durch Kaliumchlorid ausgefällt, abgesaugt, mit einer wässrigen Kaliumchloridlösung gewaschen und getrocknet. Man erhält ein rotes Farbstoffpulver, das das Alkalimetallsalz, vorzugsweise das Kaliumsalz, der Verbindung der Formel

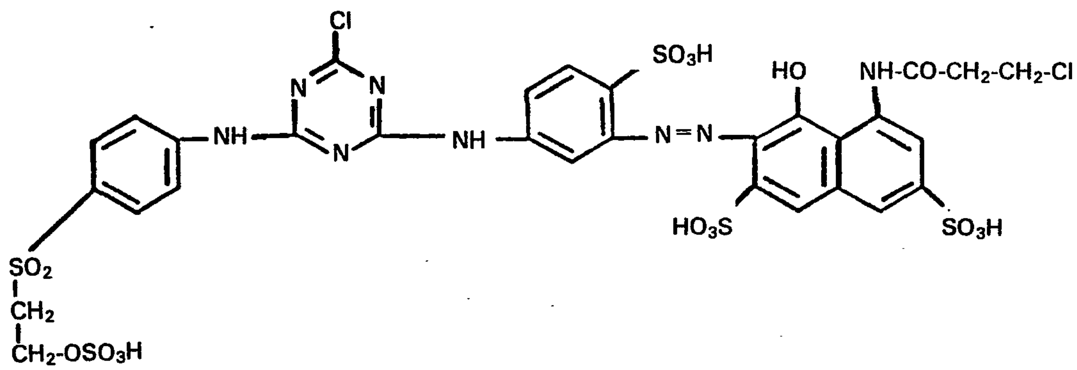

neben Elektrolyt (Kaliumchlorid) enthält. Diese Verbindung besitzt sehr gute Farbstoffeigenschaften; sie färbt die in der Beschreibung genannten Materialien, insbesondere Wolle, nach den in der Technik üblichen Applikations- und Fixiermethoden für faserreaktive Farbstoffe in brillanten roten Tönen mit sehr gutem Farbaufbau und hohem Fixiergrad. Die Färbungen besitzen eine sehr gute Lichtechtheit und gute Nassechtheiten, wie beispielsweise eine sehr gute alkalische Schweissechtheit und eine ausgezeichnete Waschechtheit bei 60°C, die auch bei filzarm ausgerüsteter Wolle und in hohen Farbtiefen vorliegen.

*Beispiel 2*

Zur Herstellung einer Diazoniumsalzlösung eines Amins entsprechend der allgemeinen Formel (2) löst man 184 Teile Cyanurchlorid in 1000 Teilen Aceton und giesst diese Lösung unter Rühren auf 3000 Teile zerstossenes Eis. Bei einer Temperatur von 10 bis 15°C lässt man unter Rühren eine neutrale Lösung von 297 Teilen 4-β-Thiosulfatoäthylsulfonyl-anilin mit etwa 100 Teilen Natriumbicarbonat in 2000 Teilen Wasser zulaufen, wobei zur Herstellung dieses Dichlortriazinylaminophenyl-Kondensationsproduktes der pH der Reaktionslösung mittels Natriumbicarbonat auf einem Wert von 4,5 bis 5,5 gehalten wird. Es wird 1 bis 2 Stunden nachgerührt, bis keine diazotierbaren Anteile mehr nachweisbar sind. Die so erhaltene Suspension führt man sodann entsprechend den Angaben des Beispieles 1 durch Umsetzung mit 1,3-Diaminobenzol-4-sulfonsäure in die entsprechende Aminoverbindung entsprechend der allgemeinen Formel (2) über, die gemäss den Angaben des Beispieles 1 diazotiert wird.

Diese Diazoniumsalzlösung wird sodann, wie in Beispiel 1 beschrieben, mit 1-(β-Chlorpropionylamino)-8-hydroxynaphthalin-3,6-disulfonsäure gekuppelt und durch Aussalzen mit Kaliumchlorid isoliert.

Es wird ein Farbstoffpulver erhalten, das neben Elektrolyt (Kaliumchlorid und Natriumchlorid) ein Gemisch des Natrium- und Kaliumsalzes der Verbindung der Formel

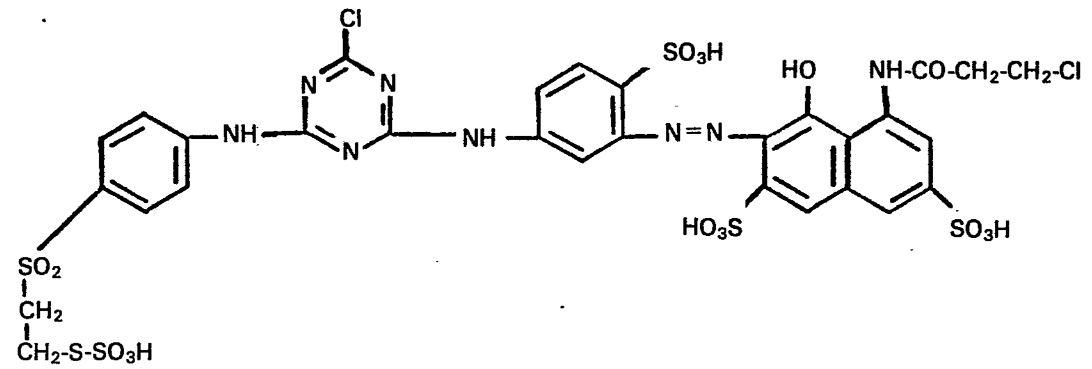

enthält. Diese Verbindung besitzt sehr gute Farbstoffeigenschaften; sie färbt die in der Beschreibung genannten Materialien, vorzugsweise Wolle, einschliesslich filzarm ausgerüsteter Wolle, nach den in der Technik für faserreaktive Farbstoffe, die eine β-Thiosulfatoäthylsulfonyl-Gruppe enthalten, üblichen und bekannten Applikations- und Fixiermethoden in klaren roten Tönen mit sehr gutem Farbaufbau und hohem Fixiergrad und guten Echtheiten, die denen der mit dem Farbstoff des Beispieles 1 erhaltenen Färbungen entsprechen.

*Beispiel 3*

Man verfährt zur Herstellung eines erfindungsgemässen Farbstoffes wie im Beispiel 1 beschrieben, verwendet jedoch anstelle von 1-Amino-8-naphthol-3,6-disulfonsäure zur Herstellung der Kupplungskomponente 319 Teile 1-Amino-8-naphthol-4,6-disulfonsäure.

Nach Aussalzen mit Natriumchlorid und Waschen mit einer wässrigen Natriumchloridlösung erhält man nach der Trocknung ein Farbstoffpulver, das neben Elektrolyt (Natriumchlorid) das Natriumsalz der Verbindung der Formel

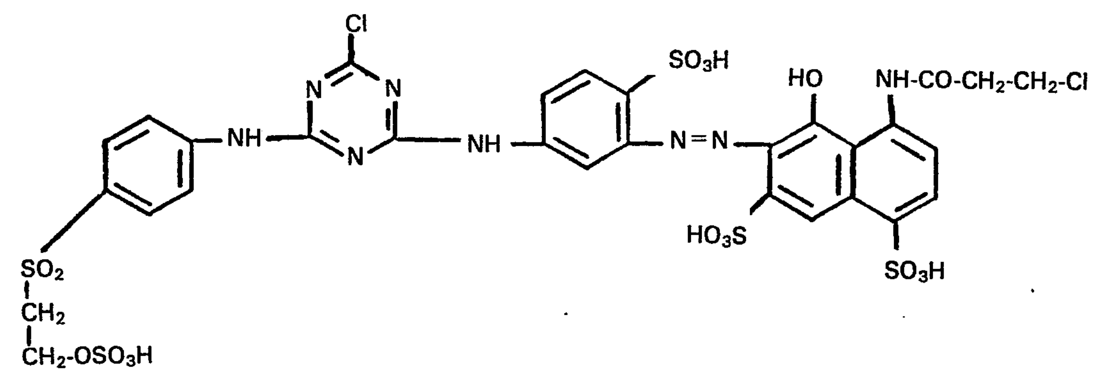

enthält. Auch diese Verbindung besitzt sehr gute Farbstoffeigenschaften, die denen des Farbstoffes von Beispiel 1 gleichen. Die mit ihm erhaltenen Färbungen und Drucke zeigen bei Färbung auf Wolle, einschliesslich filzarm ausgerüsteter Wolle, ein brillantes gelbstichiges Rot mit sehr guter Lichtechtheit und sehr guten Nassechtheiten, vor allem eine ausgezeichnete alkalische Schweissechtheit und hervorragende Waschechtheit bei 60°C, auch bei hohen Farbtiefen der Färbungen.

*Beispiel 4*

Eine Lösung von 184 Teilen Cyanurchlorid in 1000 Teilen Aceton werden auf 3000 Teile zerstossenes Eis unter Rühren eingegossen. Eine neutrale Lösung des Natriumsalzes von 268 Teilen 1,3-Diaminobenzol-4,6-disulfonsäure in 2000 Teilen Wasser werden bei einer Temperatur von 8 bis 12°C unter Einhaltung eines pH-Wertes zwischen 5 und 6 durch Eintragen von Natriumbicarbonat hinzugerührt; man rührt noch bei dieser Temperatur und in diesem pH-Bereich 3 Stunden lang nach. Sodann gibt man 185 Teile 4-Vinylsulfonyl-anilin hinzu und rührt dieses Reaktionsgemisch bei einer Temperatur von ca. 40°C und bei einem pH-Wert zwischen 5 und 6 noch 3 Stunden. Die erhaltene Lösung wird sodann auf 0 bis 5°C abgekühlt und mit 360 Teilen wässriger konzentrierter Salzsäure angesäuert. Man lässt 200 Volumenteile einer wässrigen 5n-Natriumnitritlösung langsam unter Rühren einlaufen und zerstört nach einer Nachrührzeit von 30 Minuten überschüssige salpetrige Säure mit etwas Amidosulfonsäure.

Die so hergestellte Diazoniumsalzlösung wird gemäss den Angaben des Beispieles 1 mit 1-(β-Chlorpropionylamino)-8-naphthol-3,6-disulfonsäure gekuppelt. Nach Aussalzen mit Kaliumchlorid erhält man ein Farbstoffpulver, das das Alkalimetallsalz, vorwiegend Kaliumsalz, der Verbindung der Formel

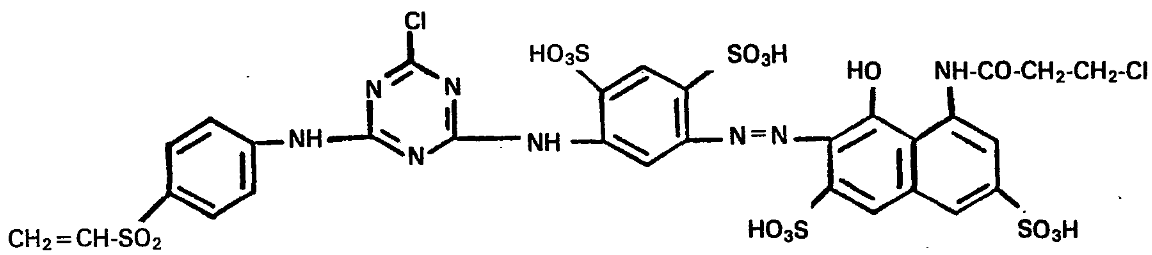

enthält. Diese Verbindung besitzt sehr gute Farbstoffeigenschaften und färbt Cellulosefasermaterialien, insbesondere Wolle, auch Filzarm ausgerüstete Wolle, nach den für faserreaktive Farbstoffe üblichen und bekannten Applikations- und Fixiermethoden in brillanten, leicht blaustichig roten Tönen mit sehr guter Licht- und guten Nassechtheiten, wie beispielsweise sehr guter alkalischer Schweissechtheit und guter Waschechtheit bei 60°C.

*Beispiel 5*

Man stellt als Verbindung der allgemeinen Formel (2) die Aminoverbindung der Formel (in Form der freien Säure geschrieben)

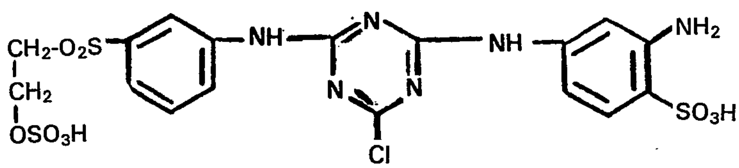

entsprechend den Angaben der Beschreibung, beispielsweise analog den Verfahrensweisen der vorherigen Beispiele 1 oder 4, durch Umsetzung mit entsprechenden äquivalenten Mengen an Cyanurchlorid, 1,3-Diaminobenzol-4-sulfonsäure und 3-β-Sulfatoäthylsulfonyl-anilin her. Des weiteren wird als Kupplungskomponente die Verbindung der Formel (in Form der freien Säure geschrieben)

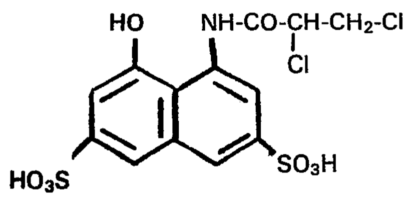

synthetisiert, indem man entsprechend den Angaben des Beispieles 1 äquivalente Mengen der 1-Amino-8-naphthol-3,6-disulfonsäure und 2,3-Dichlor-propionsäurechlorid miteinander umsetzt.

Das obengenannte Amin entsprechend der allgemeinen Formel (2) wird in üblicher Weise diazotiert und, beispielsweise gemäss den obigen Angaben des Beispieles 1, mit der erwähnten Kupplungskomponente umgesetzt. Nach Synthese der Azoverbindung wird diese aus der wässrigen Reaktionslösung mittels Kaliumchlorid ausgefällt. Es wird ein Farbstoffpulver erhalten, das das Alkalimetallsalz, vorwiegend Kaliumsalz, der Verbindung der Formel

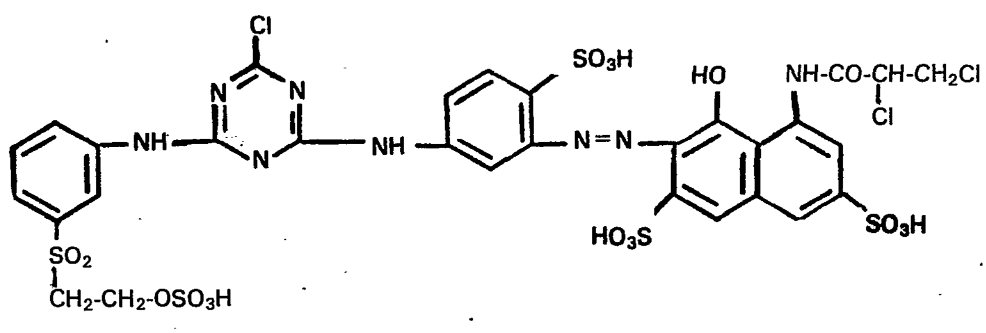

enthält. Diese Verbindung besitzt sehr gute Farbstoffeigenschaften und färbt Cellulosefasermaterialien, insbesondere Wolle, ebenso gut auch filzfrei oder filzarm ausgerüstete Wolle, in kräftigen roten Tönen mit sehr guten Echtheitseigenschaften.

*Beispiel 6*

Man stellt als Diazokomponente das Amin der Formel

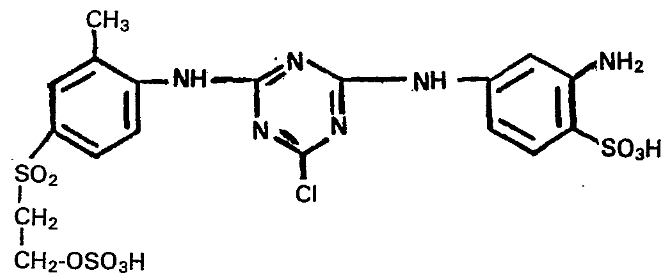

durch Umsetzung von äuivalenten Mengen an 1,3--Diaminobenzol-4-sulfonsäure, Cyanurchlorid und 2-Methyl-4-(β-sulfatoäthylsulfonyl)-anilin entsprechend den Angaben des Beispieles 1 her. Ebenso synthetisiert man als Kupplungskomponente die Verbindung der Formel

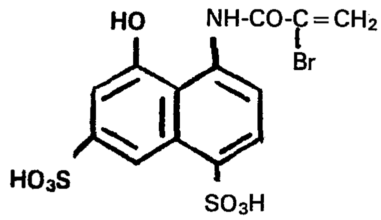

indem man entsprechend den Angaben des Beispieles 1 äquivalente Mengen an 1-Amino-8-naphthol--4,6-disulfonsäure und α-Bromacrylsäurebromid miteinander umsetzt.

Die Diazotierung des Amins und die Kupplung mit der Kupplungskomponente erfolgt in üblicher und bekannter Weise, beispielsweise wie in Beispiel 1 beschrieben. Nach Aussalzen mit Kaliumchlorid aus der Kupplungsbrühe erhält man ein Farbstoffpulver, das das Alkalimetallsalz, vorwiegend Kaliumsalz der Verbindung der Formel

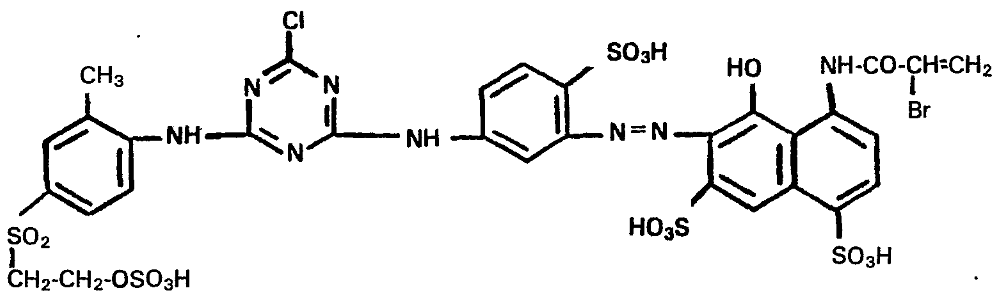

enthält. Diese Verbindung besitzt sehr gute Farbstoffeigenschaften und färbt die in der Beschreibung erwähnten Materialien, insbesondere Wolle, wie auch filzfrei oder filzarm ausgerüstete Wolle, in kräftigen, gelbstichig roten Farbtönen mit guten Echtheitseigenschaften gemäss den üblichen und bekannten Applikations- und Fixiermethoden für faserreaktive Farbstoffe.

*Beispiel 7*

Zur Herstellung eines erfindungsgemässen Farbstoffes verfährt man, wie im Beispiel 5 beschrieben, setzt jedoch als Kupplungskomponente die Verbindung der Formel (in Form der freien Säure geschrieben)

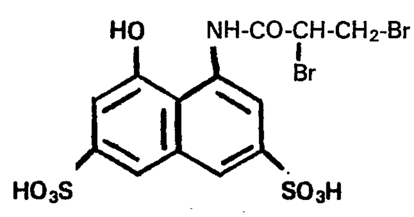

ein. Diese Kupplungskomponente wird entsprechend den Angaben des Beispieles 1 durch Umsetzung äquivalenter Mengen der 1-Amino-8-naphthol--3,6-disulfonsäure und des 2,3-Dibrompropionsäurechlorids hergestellt.

Die nach Diazotierung und Kupplung der Reaktionskomponenten erhaltene Verbindung der Formel (in Form der freien Säure geschrieben)

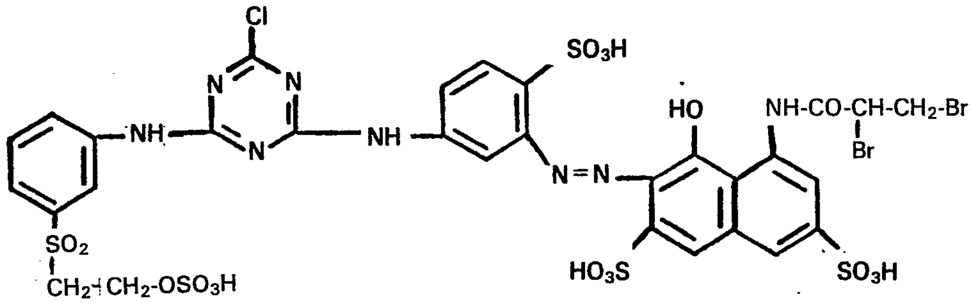

besitzt sehr gute Farbstoffeigenschaften und färbt insbesondere Wolle, in gleich guter Weise auch filzfrei oder filzarm ausgerüstete Wolle, in kräftigen roten Tönen mit sehr guten Echtheiten.

*Beispiel 8*

Man stellt als Verbindung der allgemeinen Formel (2) die Aminoverbindung der Formel (in Form der freien Säure geschrieben)

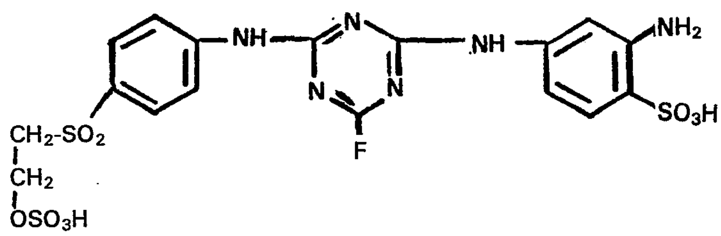

wie folgt her: 28,1 Teile Anilin-4-$\beta$-sulfatoäthylsulfon werden unter Verwendung von 11 Teilen Natriumbicarbonat in 150 Teilen Wasser gelöst. Nach dem Abkühlen auf 0°C lässt man innerhalb von 5 bis 10 Minuten 13,6 Teile Cyanurfluorid zutropfen, wobei man den pH-Wert auf 5 bis 5,5 durch portionsweise Zugabe von 11 Teilen Natriumbicarbonat hält. Man rührt noch 5 bis 10 Minuten bei 0°C und bei dem genannten pH-Wert nach; eine entnommene Probe soll keine diazotierbaren Anteile mehr enthalten.

Die so hergestellte, auf 0°C gekühlte Lösung des Monokondensates lässt man danach unter Rühren innerhalb von 15 bis 20 Minuten zu einer Lösung aus 19 Teilen 1,3-Diaminobenzol-4-sulfonsäure und 7,5 Teilen Natriumcarbonat in 200 Teilen Wasser bei einer Temperatur zwischen 15 und 20°C einlaufen. Es wird noch eine Stunde bei der angegebenen Temperatur und diesem pH gerührt.

Die so hergestellte Aminoverbindung entsprechend der allgemeinen Formel (2) wird analog den Angaben des Beispieles 1 diazotiert und mit der im Beispiel 1 beschriebenen Kupplungskomponente gekuppelt. Nach Aussalzen erhält man das Kalium-/Natriumsalz der Verbindung der Formel

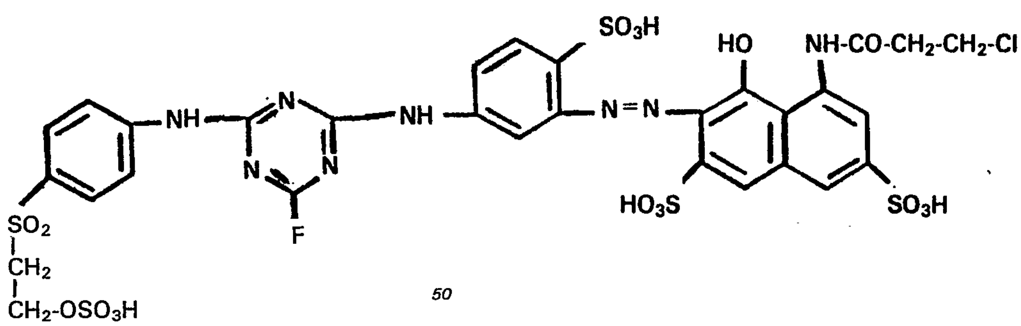

Sie besitzt ebenfalls sehr gute Farbstoffeigenschaften und färbt die in der Beschreibung genannten Materialien, insbesondere Wolle, einschliesslich filzarm ausgerüsteter Wolle, in brillanten roten Tönen mit gutem Farbaufbau und guten Echtheiten.

*Beispiel 9* (Anwendung)

100 Teile Wollkammzug werden wie üblich vorgewaschen und bei 40°C in 300 Teile eines wässrigen Färbebades gebracht, das als Hilfsmittel 1 Teil eines Oxäthylierungsproduktes eines Fettamins und 2 Teile Ammonacetat enthält. Mittels Essigsäure wird ein pH-Wert zwischen 4,8 und 5 eingestellt. In diesem Bad wird das Substrat 5 Minuten lang behandelt. Sodann gibt man 0,5 Teile des in Beispiel 1 beschriebenen erfindungsgemässen Farbstoffes, in wenig Wasser gelöst, hinzu. Das Färbebad wird innerhalb von 30 Minuten auf Siedetemperatur erhitzt und das Wollmaterial 60 Minuten lang bei dieser Temperatur gefärbt. Anschliessend wird der so gefärbte Wollkammzug aus dem Färbebad herausgenommen, in Wasser gespült, in einem wässrigen Bad, das wenig Essigsäure enthält, behandelt, wiederum mit Wasser gespült und getrocknet. Es wird eine Wollfärbung erhalten, die einen sehr brillanten, kräftigen Rotton von neutraler Nuance und einwandfreier Egalität zeigt und sehr gute Licht- und Nassechtheiten, wie beispielsweise sehr gute alkalische Schweissechtheit und sehr gute Waschechtheit bei 60°C besitzt.

*Beispiel 10* (Anwendung)

Verfährt man wie im Beispiel 9 beschrieben, setzt jedoch als zu färbendes Substrat ein Wollgarn ein, das filzfrei oder filzarm ausgerüstet ist, und führt die Färbung bei einem etwas höheren pH-Wert, wie einem pH-Wert von etwa 6, und unter Zusatz eines anderen, hierfür geeigneten und bekannten, handelsüblichen Hilfsmittels, wie beispielsweise eines sulfierten Naphthalin-Formaldehyd-Kondensationsproduktes, durch, so erhält man eine ebenso kräftige, rote Färbung von gleicher Brillanz und ebensolchen guten Echtheiten, wie in Beispiel 9 beschrieben.

*Beispiel 11* (Anwendung)

100 Teile Wollflocke werden wie üblich vorgewaschen und in 3000 Teile eines 40°C warmen wässrigen Färbebades eingebracht, das 2 Teile Ammoniumacetat enthält und mittels Essigsäure auf einen pH-Wert von 5,5 eingestellt ist. Das Wollmaterial wird 5 Minuten lang in diesem Bad behandelt; sodann werden 0,15 Teile des in Beispiel 3 hergestellten erfindungsgemässen Farbstoffes, in wenig Wasser gelöst, hinzugegeben. Das Färbebad wird sodann innerhalb von 30 Minuten auf Siedetemperatur erhitzt und die Ware 45 Minuten lang bei dieser Temperatur behandelt. Die erhaltene Färbung wird herausgenommen, mit Wasser, sodann mit einem Essigsäure enthaltenden Bad, sodann wiederum mit Wasser gespült und getrocknet.

Es wird eine vollkommen egal gefärbe Wolle erhalten, die einen sehr brillanten, gelbstichigen Rotton mit sehr guter Licht- und Nassechtheit, wie beispielsweise ausgezeichneter Alkalischer Schweissechtheit und sehr guter Waschechtheit bei 60°C besitzt.

*Beispiel 12* (Anwendung)

Man verfährt gemäss der im Beispiel 11 angegebenen Färbeweise, verwendet jedoch als zu färbendes Material eine Wollflocke, die nach einem üblichen und bekannten Verfahren filzfrei oder filzarm ausgerüstet wurde. Man führt die Färbung jedoch bei einem pH-Wert von 6 durch und erhält ein gefärbtes Wollmaterial mit einer sehr brillanten, gelbstichigen Rotnuance, die von dem Farbton der nach Beispiel 11 erhaltenen Färbung praktisch kaum abweicht; die Licht- und Nassechtheiten sind ebenso sehr gut.

*Beispiele 13 bis 18*

Verfährt man in erfindungsgemässer Verfahrensweise zur Herstellung der erfindungsgemässen Azoverbindungen, die in den nachfolgenden Tabellenbeispielen beschrieben sind, beispielsweise analog einer der in den vorhergehenden Ausführungsbeispielen 1 bis 8 beschriebenen Verfahrensvarianten, und setzt hierbei die aus diesen Formeln der Tabellenbeispiele herauslesbaren entsprechenden Ausgangsverbindungen der Formeln (2) und (3) bzw. (4) und (5) sowie das entsprechende Cyanurhalogenid ein, so erhält man diese erfindungsgemässen, in den Beispielen 13 bis 18 beschriebenen neuen Azoverbindungen in Form ihrer elektrolythaltigen Alkalimetallsalze. Diese eignen sich ebenso sehr gut als Farbstoffe zum Färben von hydroxy- und carbonamidgruppenhaltigen Fasermaterialien und liefern nach den in der Technik üblichen Anwendungs- und Fixiermethoden, beispielsweise analog den obigen Anwendungsbeispielen 9 bis 12, farbstarke echte Färbungen mit den in dem Tabellenbeispiel jeweils angegebenen Farbton.

| Beispiel | erfindungsgemässe Azoverbindung | Farbton auf Wolle |
|---|---|---|
| 13 | 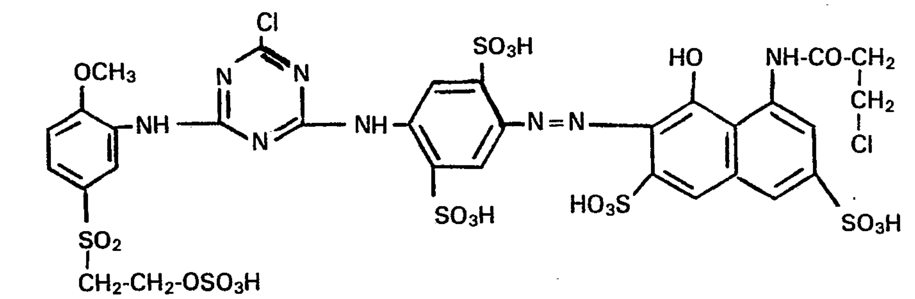 | rot |
| 14 | 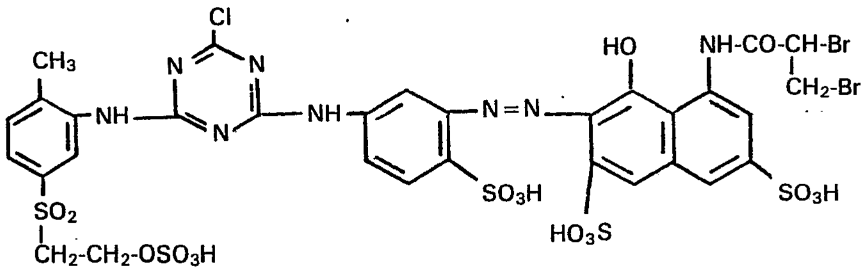 | rot |
| 15 | 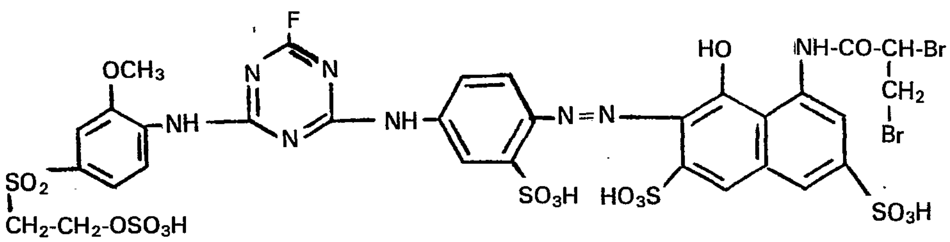 | rot |
| 16 | 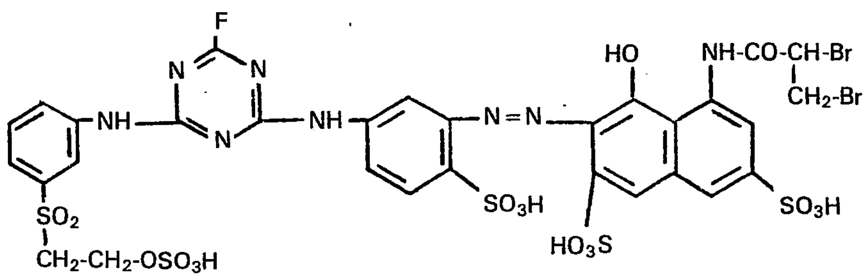 | rot |
| 17 | 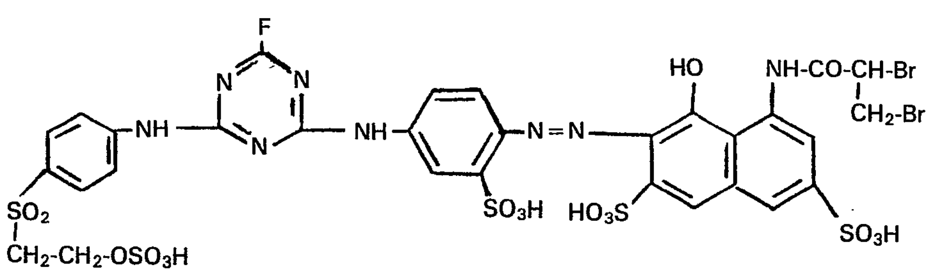 | rot |
| 18 | 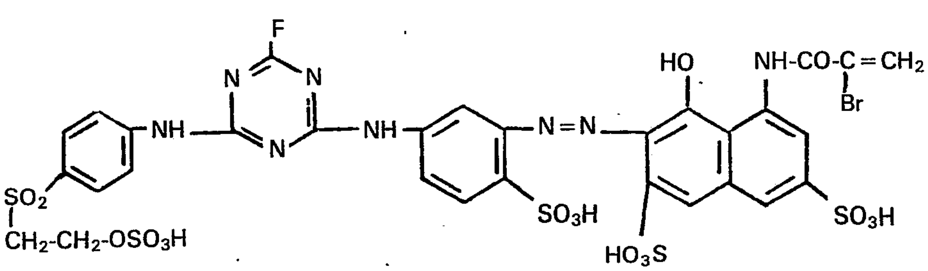 | rot |

**Patentansprüche**

1. Wasserlösliche Azoverbindungen die der allgemeinen Formel (1)

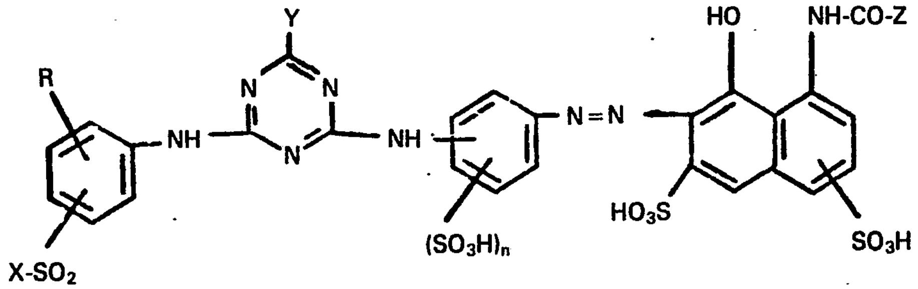

(1)

entsprechen, in welcher

R ein Wasserstoffatom, ein Chloratom, eine Alkylgruppe von 1 bis 4 C-Atomen, eine Alkoxygruppe von 1 bis 4 C-Atomen oder die Carboxygruppe bedeutet,

X für die Vinylgruppe, die β-Chloräthyl-, β-Thiosulfatoäthyl- oder β-Sulfatoäthylgruppe steht, wobei die Gruppe der Formel $-SO_2X$ in 3- oder 4-Stellung zur Aminogruppe im Benzolrest gebunden ist, Y ein Chlor- oder Fluoratom ist,

Z eine Alkylgruppe von 1 bis 4 C-Atomen bedeutet, die durch ein Chloratom oder ein Bromatom oder an zwei C-Atomen durch jeweils ein Cloratom oder Bromatom substituiert ist, oder eine Alkenylgruppe von 2 bis 4 C-Atomen bedeutet, die durch ein Chlor- oder Bromatom substituiert sein kann,

n für die Zahl 1 oder 2 steht und die zweite Sulfogruppe im Naphthalinrest in m- oder p-Stellung zur acylierten Aminogruppe gebunden ist,

und deren Salze.

2. Verfahren zur Herstellung der in Anspruch 1 definierten Azoverbindungen, dadurch gekennzeichnet, dass man die Diazoniumverbindung eines Amins der allgemeinen Formel (2)

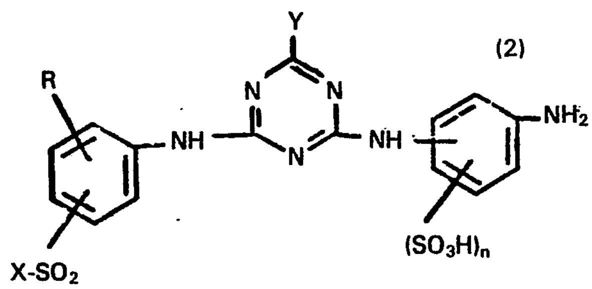

(2)

in welcher R, X, Y und n die in Anspruch 1 genannten Bedeutungen haben und die Gruppe der Formel $-SO_2-X$ in 3- oder 4-Stellung zur Aminogruppe im Benzolrest gebunden ist, mit einer Verbindung, in Form der freien Säure geschrieben, der allgemeinen Formel (3)

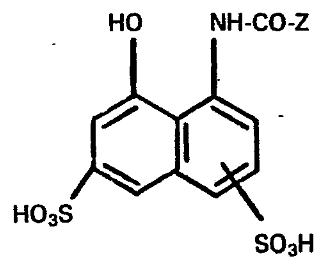

(3)

in welcher Z die in Anspruch 1 genannte Bedeutung hat und die zweite Sulfogruppe in m- und p-Stellung zur acylierten Aminogruppe steht, kuppelt.

3. Verbindungen nach Anspruch 1 der allgemeinen Formel

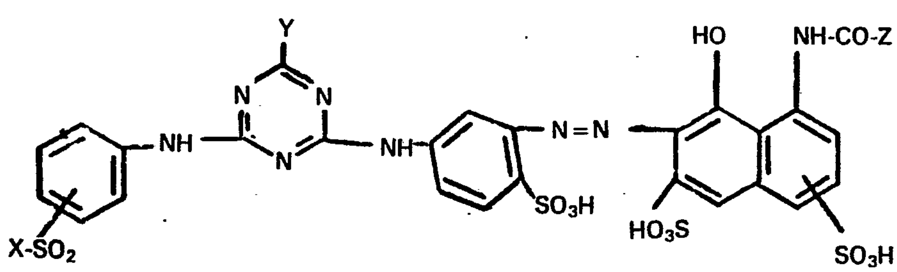

in welcher X, Y und Z die in Anspruch 1 genannten Bedeutungen haben, X jedoch bevorzugt die $\beta$-Sulfatoäthyl-Gruppe ist, und die Gruppe der Formel X-$SO_2$- im Benzolkern in 3- oder 4-Stellung zur Aminogruppe sowie die zweite Sulfogruppe im Naphthalinkern in m- oder p-Stellung zur Acylaminogruppe gebunden ist, oder deren Salze.

4. Verbindung nach Anspruch 1 der Formel

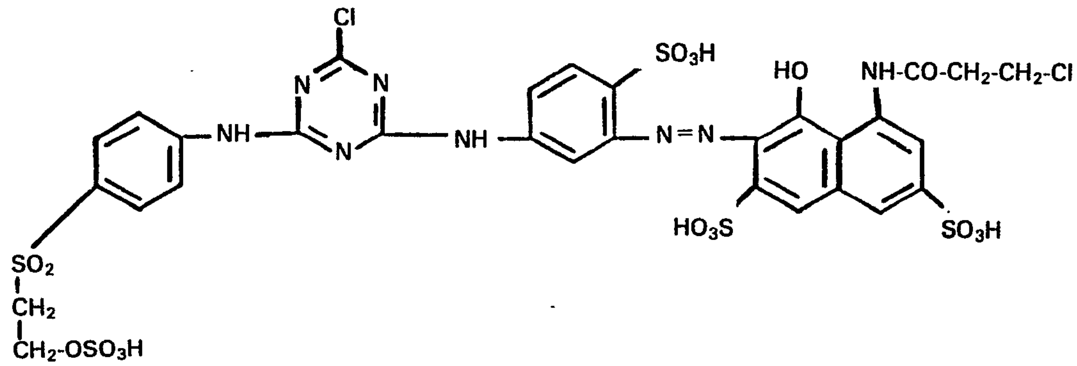

und deren Salze.

5. Verbindung nach Anspruch 1 der Formel

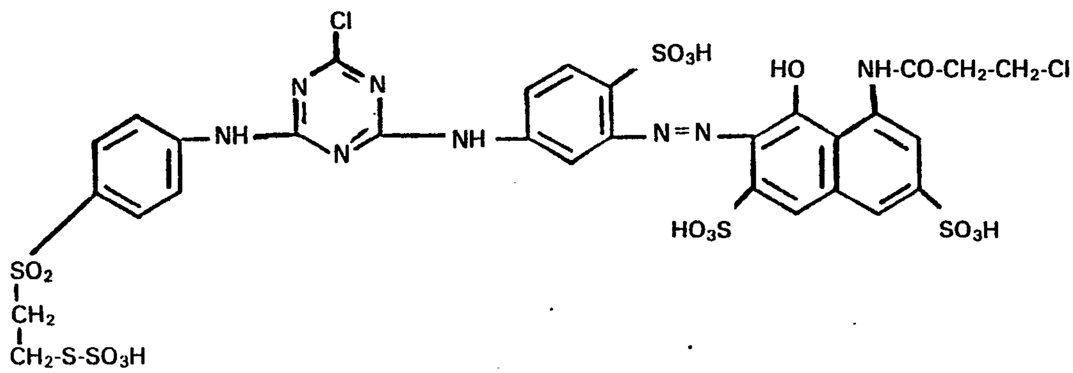

und deren Salze.

6. Verwendung der in Anspruch 1 definierten Verbindungen der allgemeinen Formel (1) als Farbstoffe.

7. Verwendung nach Anspruch 6 zum Färben von hydroxy- oder carbonamidgruppenhaltigem Material.

8. Verfahren zum Färben von hydroxy- oder carbonamidogruppenhaltigem Material, bei welchem man einen Farbstoff auf das Material aufbringt oder in das Material einbringt und ihn gegebenenfalls darauf oder darin, gegebenenfalls in der Wärme und gegebenenfalls in Anwesenheit eines alkalischen Mittels, fixiert, dadurch gekennzeichnet, dass man als Farbstoff eine Verbindung der in Anspruch 1 definierten allgemeinen Formel (1) einsetzt.

**Revendications**

1. Composés azoïques solubles dans l'eau qui répondent à la formule générale (1):

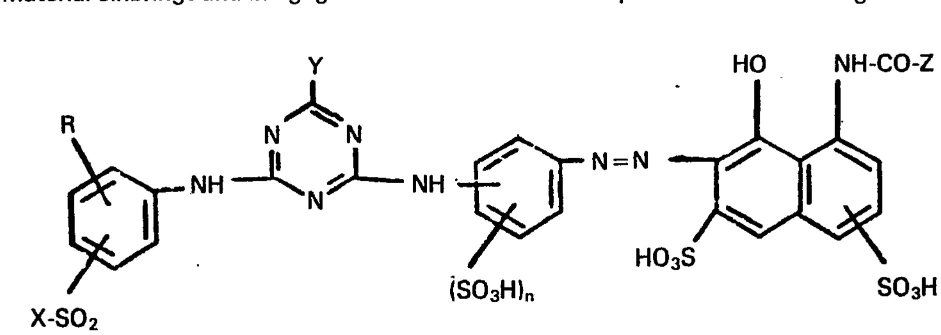

(1)

dans laquelle

R représente un atome d'hydrogène, un atome de chlore, un radical alkyle contenant de 1 à 4 atomes de carbone, un radical alcoxy contenant de 1 à 4 atomes de carbone ou le radical carboxy,

X représente un radical vinyle, chloro-2 éthyle, thiosulfato-2 éthyle ou sulfato-2 éthyle, le radical -$SO_2$-X occupant la position 3 ou la position 4 par rapport au radical amino sur le noyau benzénique,

Y représente un atome de chlore ou de fluor,

Z représente un radical alkyle contenant de 1 à 4

atomes de carbone, éventuellement porteur d'un atome de chlore ou de brome ou, sur 2 atomes de carbone et sur chacun d'eux, un atome de chlore ou un atome de brome, ou représente un radical alcényle contenant de 2 à 4 atomes de carbone, éventuellement porteur d'un atome de chlore ou de brome,

n représente le nombre 1 ou le nombre 2 et

le second radical sulfo porté par le noyau naphthalénique est en position méta ou para relativement au radical amino acylé,

ainsi que leurs sels.

2. Procédé de préparation des composés azoïques définis à la revendication 1, procédé caractérisé en ce qu'on copule le diazoïque d'une amine répondant à la formule générale (2):

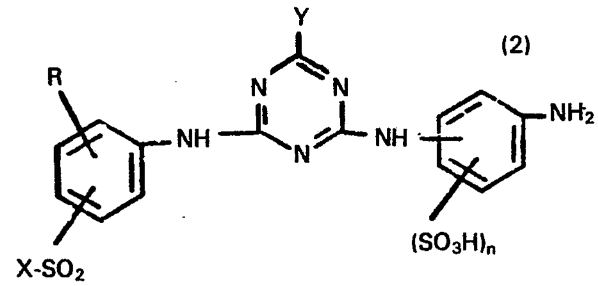

(2)

dans laquelle R, X, Y et n ont les significations données à la revendication 1 et dans laquelle le radical $-SO_2-X$ occupe, sur le noyau benzénique, la position 3 ou la position 4 par rapport au radical amino, avec un composé qui, représenté sous la forme de l'acide libre, répond à la formule générale (3):

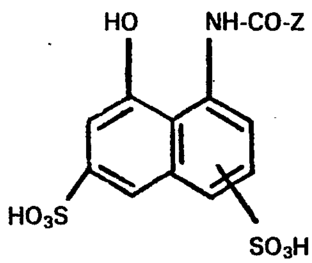

(3)

dans laquelle Z a la signification donnée à la revendication 1 et dans laquelle le second radical sulfo occupe la position méta ou la position para relativement au radical amino acylé.

3. Composés selon la revendication 1 qui répondent à la formule générale:

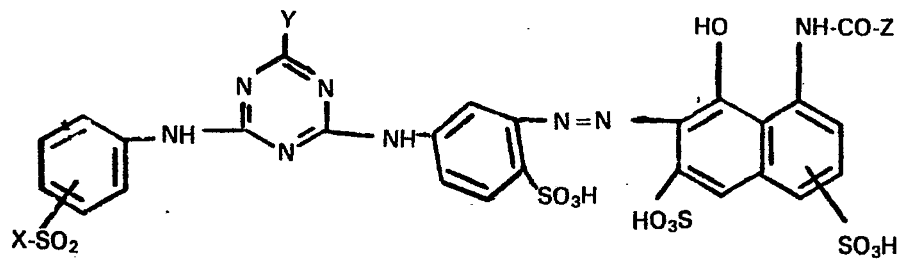

dans laquelle X, Y et Z ont les significations données à la revendication 1 mais X représente de préférence un radical sulfato-2 éthyle, et dans laquelle le radical $X-SO_2-$ occupe, sur le noyau benzénique, la position 3 ou la position 4 par rapport au radical amino, et le second radical sulfo porté par le noyau naphthalénique occupe la position méta ou la position para relativement au radical amino,

ou leurs sels.

4. Composé selon la revendication 1 qui répond à la formule:

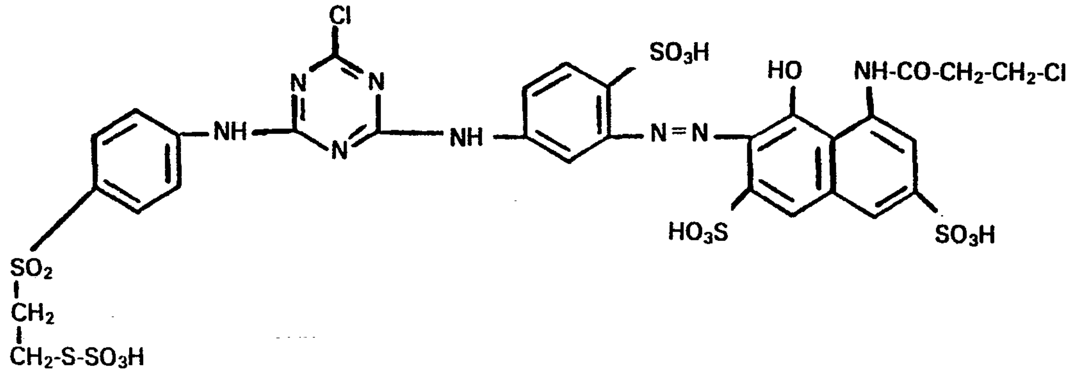

et ses sels.

5. Composé selon la revendication 1 qui répond à la formule:

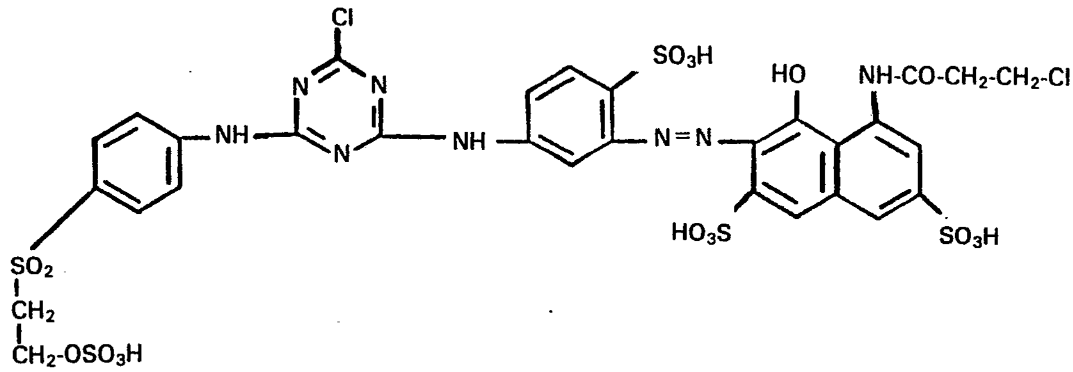

et ses sels.

6. Application des composés de formule générale (1) définis à la revendication 1 comme colorants.

7. Application selon la revendication 6 selon laquelle on teint une matière renfermant des radicaux hydroxy ou carbamoyles.

8. Procédé pour teindre une matière renfermant des radicaux hydroxy ou carbamoyles, selon lequel on applique un colorant sur la matière ou on introduit un colorant dans la matière et, les cas échéant, on le fixe sur ou dans la matière, éventuellement à chaud et éventuellement en présence d'un agent alcalin, ce procédé étant caractérisé en ce qu'on utilise comme colorant un composé répondant à la formule générale (1) définie à la revendication 1.

**Claims**

1. Water-soluble azo compounds of the general formula (1)

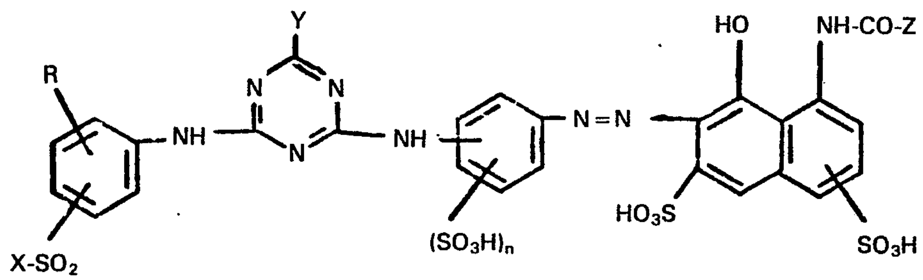

(1)

in which

R is a hydrogen atom, a chlorine atom, an alkyl group of from 1 to 4 C-atoms, an alkoxy group of from 1 to 4 C-atoms or the carboxy group,

X is the vinyl group, the β-chloroethyl, β-thiosulfatoethyl or β-sulfatoethyl group, the group of the formula $-SO_2X$ being bound in the benzene ring in 3- or 4-position to the amino group,

Y is a chlorine or fluorine atom,

Z is an alkyl group of from 1 to 4 C-atoms which is substituted by one chlorine atom or one bromine atom or at two C-atoms each by one chlorine or bromine atom, or is an alkenyl group of from 2 to 4 C-atoms which may be substituted by one chlorine or bromine atom,

n is the number 1 or 2,

and the second sulfo group in the naphthalene radical is bound in m-position or p-position relative to the acylated amino group,

and the salts thereof.

2. Process for the manufacture of the azo compounds defined in claim 1, characterized by that the diazonium compound of an amine of the general formula (2)

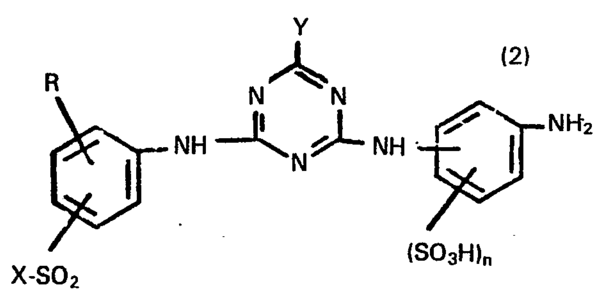

wherein R, X, Y and n have the meanings mentioned in claim 1 and the group of the formula $-SO_2-X$ is bound in the benzene radical in 3- or 4-position relative to the amino group, is coupled with a compound, written in form of the free acid, of the general formula (3)

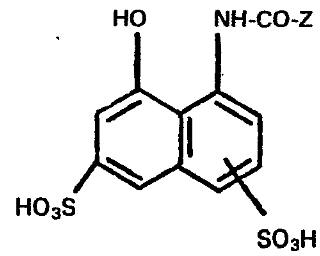

(3)

in which Z has the meaning mentioned in claim 1 and the second sulfo group is in m- or p-position relative to the acylated amino group.

3. Compounds according to claim 1 of the general formula

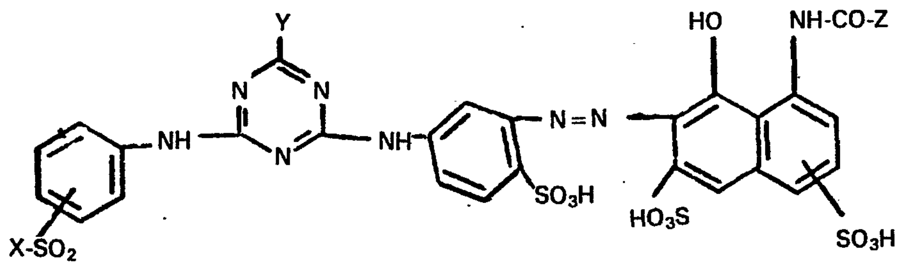

wherein X, Y and Z have the meanings mentioned in claim 1, X, however, preferably is the β-sulfatoethyl group, and the group of the formula $X\text{-}SO_2\text{-}$ is bound in the benzene nucleus in 3- or 4-position relative to the amino group, and the second sulfo group in the naphthalene nucleus is bound in m- or p-position to the acylamino group, or the salts thereof.

4. Compound according to claim 1 of the formula

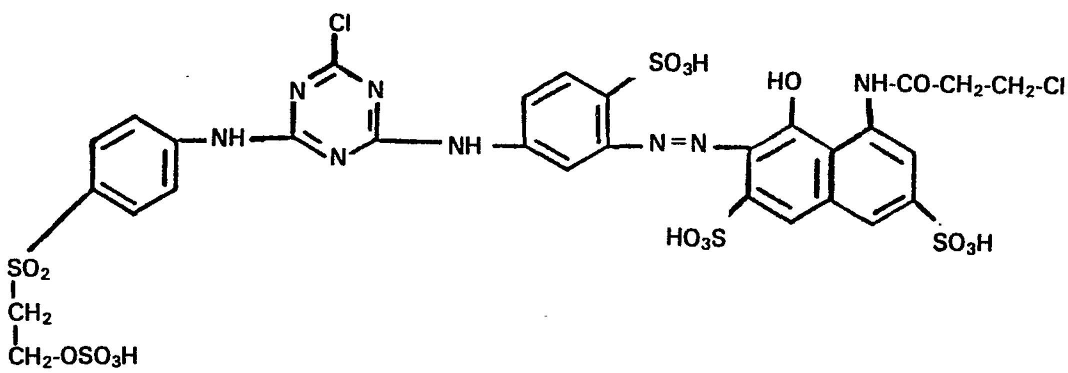

and the salts thereof.

5. Compound according to claim 1 of the formula

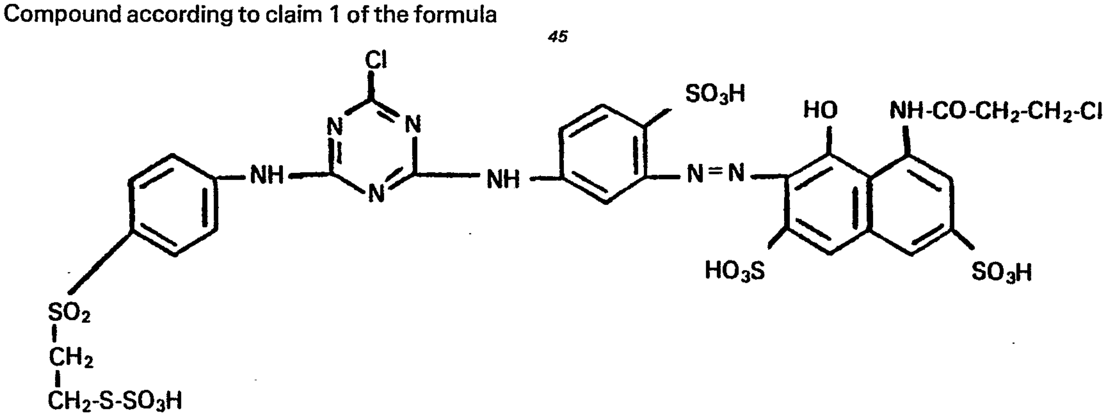

and the salts thereof.

6. Use of the compounds of the general formula (1) defined in claim 1, as dyestuffs.

7. Use according to claim 3 for coloring material containing hydroxy or carbonamide groups.

8. Process for colouring a material containing hydroxy or carbonamide groups, which comprises applying a dyestuff onto the material or incorporating it into the material and optionally fixing it on the material or in the material, optionally by means of heat and optionally in the presence of an alkaline agent, characterized by that a compound of the general formula (1) defined in claim 1, is used as a dyestuff.